# EUROPEAN PATENT SPECIFICATION

(11) **EP 1 716 739 B1**
(45) Date of publication and mention of the grant of the patent: **17.12.2008**
(21) Application number: 06075946.1
(22) Date of filing: 25.04.2006
(51) Int. Cl.: A01D 45/26

(54) **Harvesting machine for vegetable plants, such as for example broccoli**
Erntemaschine für Gemüsepflanzen wie zum Beispiel Brokkoli
Machine récolteuse de plantes potagères comme par exemple brocoli

(30) Priority: 25.04.2005 NL 1028865
(43) Date of publication of application: 02.11.2006
(73) Proprietor: Tumoba B.V., 2991 VC Barendrecht (NL)
(72) Inventor: Molenaar, Hendrik Willem, 2992 HN Barendrecht (NL)
(74) Representative: Reynvaan, Lambertus Johannes

(56) References cited:
- BE-A- 457 836
- US-A- 3 587 216
- US-A- 3 821 987
- US-B1- 6 302 264

## Description

The invention relates to a device for harvesting vegetable plants, comprising a number of harvesting elements arranged on a vehicle, each of which consists of two conveyor belts which run parallel and are spaced apart, the tracks of which facing one another and running in a vertical plane form clamping surfaces which extend from a point near the ground to a holding area situated relatively high on the vehicle and which can clamp the vegetable plants between them, a cutting element being arranged near the end of the clamping surfaces which is situated near the ground in order to cut the vegetable plants (see e.g. US-B-6302264).

Harvesting machines of this type are used, for example, for harvesting crops having a stem, such as for example broccoli. With the known harvesting machines of this type, the conveyor belts run from the end near the ground, where the plant is received between the clamping surfaces and cut, in a virtually straight line obliquely upwards to the holding area. The clamping surfaces in this case have a horizontal backwardly moving velocity component which is virtually equal to the forward speed of travel of the vehicle, so that the horizontal speed at each point of the clamping surfaces relative to the ground is virtually zero. However, as a consequence of this arrangement of the clamping surfaces, the latter also have, in the known harvesting machines a vertical velocity component, which results in a vertical tensile force being exerted on the plant when the plant is being cut off, which is undesirable because of damage to the plant.

Finally, the known harvesting machines are provided with transfer elements downstream of said conveyor belts, which transfer elements transfer the cut crops to other conveyor elements which have a different direction of movement in order to be able to transport the harvested crops away from the holding area for storage or further processing. These transfer elements complicate the device and make it expensive.

It is an object of the present invention to provide a harvesting machine with which the plants can be cut off without a vertical tensile force being exerted on the plant.

A further object of the present invention is to provide a harvesting machine which is of a simple, compact and inexpensive design.

According to the present invention, this object is achieved in that the conveyor belts are each in the form of an endless chain made from panel-shaped links which are connected to one another by means of a hinge pin such that adjoining links are able to execute a limited rotary movement relative to each other about an axis which is perpendicular to the hinge pin, which panel-shaped links are covered on the one side with a continuous strip of suitable foam rubber material for forming the clamping surfaces, and are provided on the other side with guide means which cooperate with a fixed guide which ensures that a desired shaped path is followed, and in that the clamping surfaces initially run horizontally over a certain distance from the end which is situated near the ground and then deflect upwards.

Such conveyor chains are already known in the prior art and, if the panel-shaped links are directed vertically, can follow a bend in the vertical plane as well as in the horizontal plane. Such belts thus provide a very large degree of freedom of movement. It is thus possible for the clamping surfaces to have a first horizontal receiving section, in which section the stem of the plant is clamped and cut off, an upwardly directed lifting section adjoining this receiving section, which runs to the holding area or to a conveying element adjoining the latter. Due to this horizontal receiving section, no vertically directed tensile force is exerted on the plant while it is being cut off. Furthermore, the clamping surfaces are significantly smaller in the horizontal direction as the lifting section can be at a much steeper upward angle than with conventional conveyor belts.

According to an advantageous embodiment of the invention, the clamping surfaces follow a circular arch of approximately 180 degrees behind the horizontal receiving section. This has the advantage that the cut crops reach the holding area in an upside down position and land directly on a subsequent conveying element when they are released by the clamping surfaces, so that no additional transfer elements are required therefor.

The invention will be described in more detail below with reference to the accompanying drawing, in which:
Fig. 1 diagrammatically shows a side view of the conveyor belts of the harvesting element,
Fig. 2 shows a cross section of the conveying element along line II-II in Fig. 1,
Fig. 3 shows a side view on a larger scale of a detail of the conveyor belt from Figs. 1 and 2,
Fig. 4 shows another embodiment of the harvesting machine.

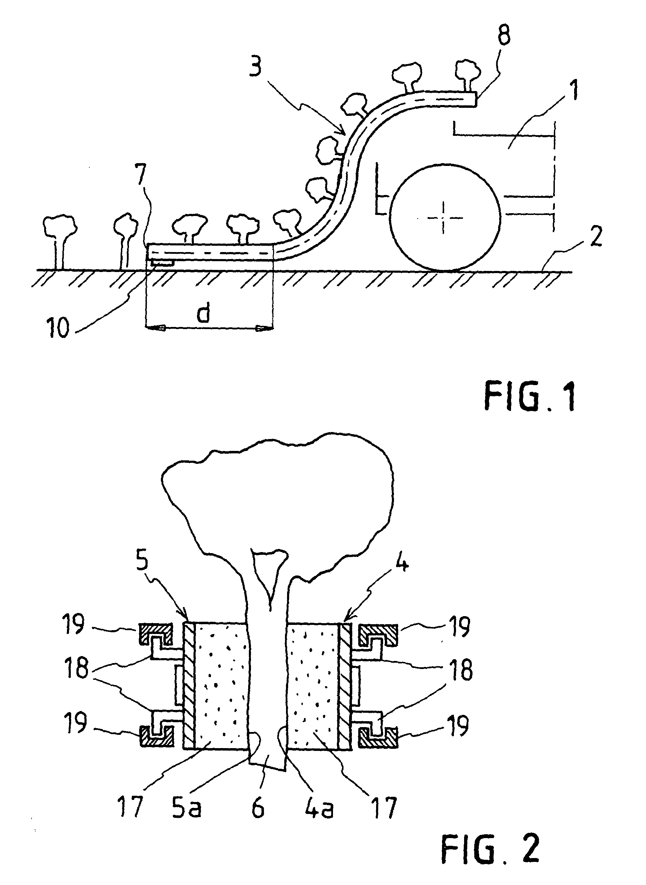

As can be seen in Figs. 1 and 2, the harvesting machine according to the invention substantially consists of a vehicle 1 which can be driven over the ground 2 and has one or more harvesting elements 3, each of which consists of two parallel continuous conveyor belts 4, 5, the sections of which facing one another and running in a vertical plane defining clamping surfaces 4a, 5a for receiving the stem 6 of the crop to be harvested. The vertically directed clamping surfaces 4a, 5a of the conveyor belts extend from an end 7 located near the ground 2 to a holding area 8 located relatively high on the vehicle 1. According to the invention, these vertical clamping surfaces initially run horizontally over a certain distance d from the end which is situated near the ground, i.e. parallel to the ground. Downstream of this horizontal section, the clamping surfaces extend in an S-shape, i.e. they initially run upwards in the shape of an arch and subsequently run approximately horizontally to the holding area 8 by means of an oppositely directed bend.

Near the end 7 of the clamping surfaces situated near the ground, a cutting element 10 is arranged for cutting the stem of the plant when the latter is clamped between said clamping surfaces 4a, 5a.

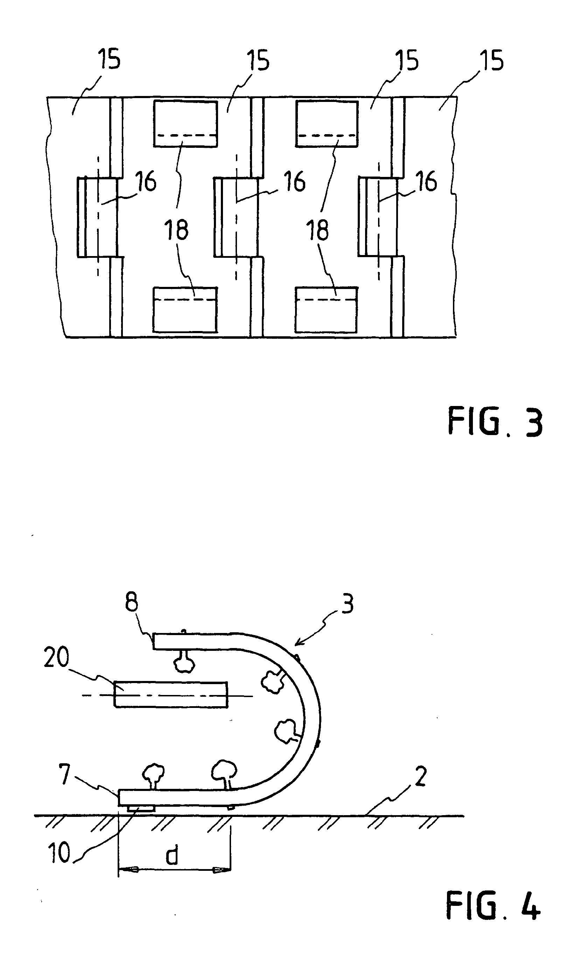

In order to make the abovedescribed path of the vertical clamping surfaces possible, each conveyor belt, as can be seen in Fig. 3, consists of a number of substantially rectangular panel-shaped links 15 which are connected to one another along the long sides and are connected to one another by means of a hinge pin 16. This hinged connection is designed with such an amount of play that the panels connected to one another have a certain freedom of movement, i.e. the panels are able to execute a slight rotation between themselves in the plane of the drawing, i.e. about an axis which is perpendicular to the plane of the drawing. On the side which is not visible in the drawing, the panel-shaped links are covered with a continuous strip of a suitable foam-type rubber material 17 (see Fig. 2), which is attached to the links by vulcanization, so that both clamping surfaces are continuous clamping surfaces which are capable of receiving the stem of the plant between them without damage. Obviously, the rubber-like material can follow the rotary movements of the links 15 between themselves.

On the side which is not covered with foam rubber, the panels 15 are provided with guide lips 18 which engage with fixed guide rails 19 and with which the conveyor belts can follow any desired path.

Fig. 4 shows yet another embodiment of the harvesting machine according to the invention. This embodiment differs from that in Fig. 1 in that the clamping surfaces 4a and 5a pass through half a circular arch with reference to the horizontal section d. This means that the clamped stem is rotated through 180° at the end point and, from this upside down position can land directly on a subsequent conveying element 20 from the clamping surfaces, which convyeing element may have another direction of movement, for example perpendicular to the plane of the drawing. In this way, no special transfer means are required and the risk of the harvested crop still coming into contact with the conveyor belts 4, 5 and possibly being damaged thereby is prevented.

The operation of the harvesting machine is as follows:

In the first horizontal section d, the clamping surfaces 4a, 5a of the conveyor belts 4, 5 have a horizontal speed which is equal to and opposite to the forward speed of the vehicle 1. Relative to the ground 2, these clamping surfaces thus have a speed of zero. As this section runs exactly horizontal, no vertical tensile forces are exerted on the stem of the plant while it is clamped and cut off, thus avoiding damage to the plant. Another advantage of the conveyor belts according to the invention is that they can run upwards locally at a steeper upward angle and thus take up less space in the horizontal direction.

It will be clear that the invention is not limited to the embodiment illustrated and described above, but that a large number of variants are possible without departing from the scope of the attached claims. Although the harvesting machine has been described above for harvesting broccoli, such a harvesting machine can obviously also be used for other vegetable plants, such as for example parsley or celery.

## Claims

1. Harvesting machine for vegetable plants, comprising a number harvesting elements arranged on a vehicle, each of which consists of two conveyor belts which run parallel and are spaced apart, the sections of which facing one another and running in a vertical plane form clamping surfaces which extend from a point near the ground to a holding area situated relatively high on the vehicle and which can clamp the vegetable plants between them, a cutting element being arranged near the end of the clamping surfaces which is situated near the ground in order to cut the vegetable plants, **characterized in that** the conveyor belts (4, 5) are each in the form of an endless chain made from panel-shaped links (15) which are connected to one another by means of a hinge pin (16) such that adjoining links are able to execute a limited hinged movement relative to each other about an axis which is perpendicular to the hinge pin, which panel-shaped links are covered on the one side with a continuous strip (17) of suitable foam rubber material for forming the clamping surfaces (4a, 5a), and are provided on the other side with guide means (18) which cooperate with a fixed guide (19) which ensures that a desired shaped path is followed, and **in that** the clamping surfaces initially run horizontally over some distance (d) from the end (7) which is situated near the ground and then deflect upwards.

2. Harvesting machine according to Claim 1, **characterized in that** the clamping surfaces follow a circular arch of approximately 180° behind the first horizontal section and a subsequent conveying element (20) is arranged under the free end (8) of these clamping surfaces.

3. Harvesting machine according to Claim 1 or 2, **characterized in that** the strip (17) of foam rubber material is attached to the links by vulcanization.

## Patentansprüche

1. Erntemaschine für Gemüsepflanzen, die eine Anzahl von an einem Fahrzeug angeordneten Ernteelementen umfasst, von denen jedes aus zwei Förderbändern besteht, die parallel laufen und von einander beabstandet sind, und deren Teilstücke, die einander gegenüberliegen und in einer vertikalen Ebene laufen, Klemmflächen bilden, die sich von einem Punkt nah am Boden zu einem Haltebereich, der verhältnismäßig hoch an dem Fahrzeug vorgesehen ist, erstrecken und welche die Gemüsepflanzen zwischen sich einklemmen können, wobei ein Schneidelement nah an dem Ende der Klemmflächen vorgesehen ist, das nah am Boden positioniert ist, um die Gemüsepflanzen abzuschneiden, **dadurch gekennzeichnet, dass** die Förderbänder (4, 5) jeweils in der Form einer Endloskette vorliegen, die aus plattenförmigen Kettengliedern (15) gefertigt ist, welche durch Gelenkbolzen (16) derart aneinander befestigt sind, dass benachbarte Kettenglieder in der Lage sind, eine begrenzte Schwenkbewegung relativ zueinander um eine Achse, die senkrecht zu dem Gelenkbolzen liegt, durchzuführen, wobei die plattenförmigen Kettenglieder auf der einen Seite mit einem kontinuierlichen Streifen (17) eines geeigneten Gummischaummaterials bedeckt sind, um die Klemmflächen (4a, 5a) zu bilden, und auf der anderen Seite mit Führungsmitteln (18) versehen sind, die mit einer festen Führung (19) zusammen wirken, welche sicherstellt, dass ein gewünschter geformter Pfad verfolgt wird, und dass die Klemmflächen anfangs horizontal über eine gewisse Strecke (d) von demjenigen Ende (7), das nah am Boden positioniert ist, laufen und dann nach oben umlenken.

2. Erntemaschine nach Anspruch 1, **dadurch gekennzeichnet, dass** die Klemmflächen einem kreisförmigen Bogen von ungefähr 180° hinter dem ersten horizontalen Bereich folgen und ein anschließendes Förderelement (20) unterhalb des freien Endes (8) dieser Klemmflächen angeordnet ist.

3. Erntemaschine gemäß Anspruch 1 oder 2, **dadurch gekennzeichnet, dass** der Streifen (17) aus Schaumgummimaterial durch Vulkanisieren an den Kettengliedern befestigt ist.

## Revendications

1. Machine à récolter pour plantes potagères, comprenant un certain nombre d'éléments de récolte agencés sur un véhicule, chacun deux consiste en deux bandes de convoyeur qui s'étendent parallèlement et sont espacées l'une de l'autre, les sections de celles-ci se faisant face l'une à l'autre et s'étendant dans un plan vertical forment des surfaces de blocage qui s'étendent à partir d'un point proche du sol vers une zone de retenue située relativement haut sur le véhicule et qui permettent de bloquer les plantes potagères entre elles, un élément de coupe étant agencé à proximité de l'extrémité des surfaces de blocage qui est situé à proximité du sol dans le but de couper les plantes potagères, **caractérisée en ce que** les bandes de convoyeur (4, 5) sont chacune sous la forme d'une chaîne sans fin réalisée à partir de biellettes en forme de panneau (15) qui sont reliées les unes aux autres au moyen d'une broche d'articulation (16) de telle sorte que les biellettes adjacentes peuvent exécuter un mouvement articulé limité les unes par rapport aux autres autour d'un axe qui est perpendiculaire à la broche d'articulation, lesquelles biellettes en forme de panneau sont recouvertes, sur une première face, par une bande continue (17) de matériau approprié à base de mousse de caoutchouc afin de former les surfaces de blocage (4a, 5a), et comportent sur l'autre face des moyens de guidage (18) qui coopèrent avec un guide fixe (19) qui assure qu'un trajet de forme désirée est suivi, et **en ce que** les surfaces de blocage s'étendent initialement horizontalement sur une certaine distance (d) à partir de l'extrémité (7) qui est située à proximité du sol et sont ensuite déviées vers le haut.

2. Machine à récolter selon la revendication 1, **caractérisée en ce que** les surfaces de blocage suivent une arche circulaire approximativement sur 180° derrière la première section horizontale et un élément de transfert supplémentaire (20) est agencé sous l'extrémité libre (8) de ces surfaces de blocage.

3. Machine à récolter selon la revendication 1 ou 2, **caractérisée en ce que** la bande (17) de matériau à base de mousse de caoutchouc est liée aux biellettes par vulcanisation.
